# EUROPEAN PATENT APPLICATION

(11) **EP 4 834 678 A1**
(43) Date of publication of application: **04.11.2026**
(21) Application number: 26173535.1
(22) Date of filing: 21.04.2026
(51) Int. Cl.: B60T 8/17, B60T 8/26, B60T 8/32, B60W 10/06, B60W 10/188

(54) **BRAKE DEVICE AND VEHICLE**

(30) Priority: 30.04.2025 JP 2025075665
(71) Applicant: HONDA MOTOR CO., LTD., Tokyo 105-8404 (JP)
(72) Inventor: KAJIYAMA, Keigo, Tokyo, 105-8404 (JP); TANAKA, Kentaro, Tokyo, 105-8404 (JP); TANI, Kazuhiko, Tokyo, 105-8404 (JP); TAKAHASHI, Shinya, Tokyo, 105-8404 (JP); OSHIMA, Hidekazu, Tokyo, 105-8404 (JP)
(74) Representative: Kiwit, Benedikt

(57) **Abstract**

The present disclosure provides a brake device (130) for a vehicle (100) including a front wheel brake operation element (106) and a rear wheel brake operation element (119), comprising: a first detection unit (4a, 8a) that detects an operation amount on the front wheel brake operation element as a front wheel brake operation amount; a second detection unit (4b, 8b) that detects an operation amount on the rear wheel brake operation element as a rear wheel brake operation amount; an assist mechanism (6) that performs brake assist for increasing braking force of the vehicle; and a controller (7) that controls the assist mechanism to start brake assist intervention when the rear wheel brake operation amount that exceeds a rear wheel side intervention threshold is detected by the second detection unit, and in a state in which the brake assist has been started in response to the rear wheel brake operation amount exceeding the rear wheel side intervention threshold, the controller releases the brake assist intervention based on the front wheel brake operation amount detected by the first detection unit.

## Description

### BACKGROUND OF THE INVENTION

### Field of the Invention

The present invention relates to a braking technique of a vehicle, particularly to a brake assist control technique for a straddle type vehicle.

### Description of the Related Art

In recent years, efforts to provide access to sustainable transportation systems in consideration of vulnerable people among traffic participants are becoming active. In order to achieve this, efforts are being focused on research and development for further improving traffic safety and convenience through research and development of driving assistance techniques. The straddle type vehicle includes a brake operation element for each brake of a front wheel and a rear wheel independently. The brake operation corresponding to a riding situation is performed by a rider or in accordance with braking force distribution of a control device. In addition, for example, while in cornering, inputs that meet various purposes such as attitude control and adjustment of a travel line using a rear wheel brake operation are made.

International Publication No. 2023/007428 describes a brake system that controls the braking force of a straddle type vehicle by using a braking mechanism (a so-called return modulator) including a main flow passage for distributing a brake fluid of a master cylinder to a wheel cylinder, a sub flow passage for escaping the brake fluid of the wheel cylinder, and a supply flow passage for supplying the brake fluid of the master cylinder to the sub flow passage. In such a brake system, when a situation in which the brake operation is being performed by the rider is determined, based on a detection value of master cylinder pressure, a driving assistance mode (so-called brake assist) for amplifying the braking force of the straddle type vehicle is performed. In addition, when the detection value of the master cylinder pressure becomes smaller than reference pressure, it is determined that the brake operation is released, and the driving assistance mode is finished.

In a case where the brake assist is implemented on the straddle type vehicle, it can be configured to start brake assist intervention when the operation amount on the front wheel brake operation element or the rear wheel brake operation element exceeds an intervention threshold. When the rider performs vehicle behavior control such as attitude control with the brake operation, the brake assist intervention may start in a state in which the rider has no intention of performing emergency braking. For example, in traveling on a downhill, by finely operating the front wheel brake operation element while strongly operating the rear wheel brake operation element, the rider stabilizes the vehicle (a vehicle body). In this situation, when the operation amount on the rear wheel brake operation element exceeds the intervention threshold, the brake assist intervention starts in a state in which the rider does not intend to stop suddenly, and the rider may feel uncomfortable in driving. Alternatively, in the straddle type vehicle, for example, deceleration or a course change can be made by braking in order to avoid an approach to a forward object. However, although the rider tries to adjust the speed for avoidance, if the brake assist for the purpose of a sudden stop intervenes, the rider may still feel uncomfortable in driving. Therefore, in the straddle type vehicle having such a configuration, there is a demand for releasing the brake assist appropriately even in a case where the brake assist intervention has been started in response to the operation on the rear wheel brake operation element, and for performing appropriate brake assist as intended by the rider.

### SUMMARY OF THE INVENTION

The present invention provides a technique capable of performing appropriate brake assist as intended by a rider. In addition, the present invention contributes to development of a sustainable transportation system, accordingly.

The present invention in its first aspect provides a brake device as specified in claims 1 to 7.

The present invention in its second aspect provides a vehicle as specified in claim 8.

Further features of the present invention will become apparent from the following description of exemplary embodiments with reference to the attached drawings.

### BRIEF DESCRIPTION OF THE DRAWINGS

Fig. 1 is a side view of a straddle type vehicle according to a first embodiment;
Fig. 2 is a schematic diagram illustrating a configuration example of a brake device according to the first embodiment;
Fig. 3 is a control block diagram of the brake device according to the first embodiment;
Fig. 4 is a flowchart illustrating a control flow for starting and performing brake assist intervention in the first embodiment;
Fig. 5 is a flowchart illustrating a control flow for releasing the brake assist intervention in the first embodiment;
Fig. 6 is a flowchart illustrating a control flow for releasing the brake assist intervention in a second embodiment; and
Fig. 7 is a flowchart illustrating a control flow for starting, performing, and releasing the brake assist intervention in a third embodiment.

### DESCRIPTION OF THE EMBODIMENTS

Hereinafter, embodiments of the present invention will be described with reference to the drawings. The present invention is not limited to the following embodiments, and also includes configuration changes and modifications within the scope and spirit of the present invention. In addition, all combinations of features to be described in the embodiments are not necessarily essential to the present invention. Note that the same components are denoted by the same reference signs, and their descriptions will be omitted.

### <First Embodiment>

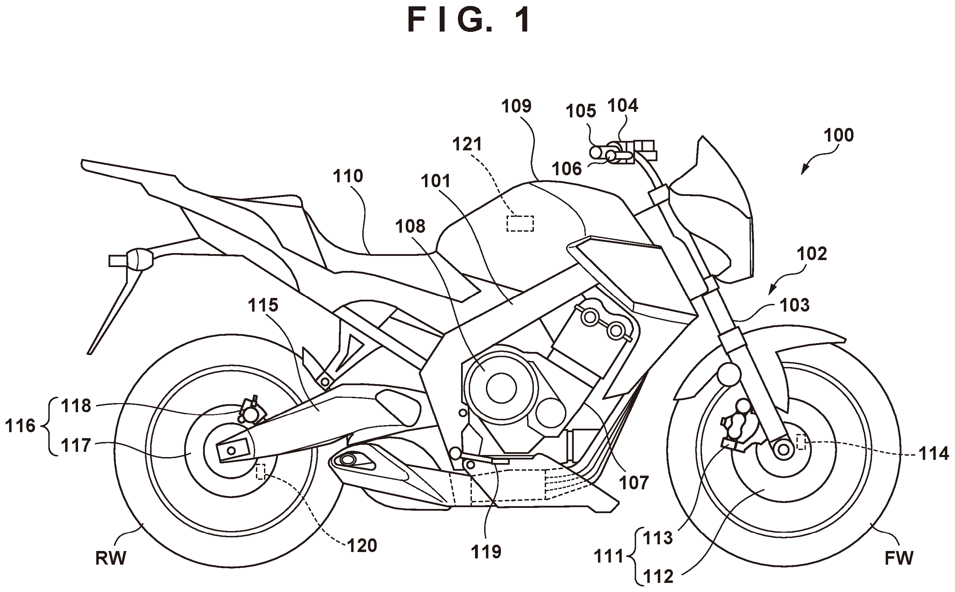

A first embodiment according to the present invention will be described. Fig. 1 is a side view of a straddle type vehicle 100 (hereinafter, simply referred to as the vehicle 100 in some cases) according to the present embodiment. The vehicle 100 is a motorcycle including one front wheel FW and one rear wheel RW. Note that the present invention is not limited to the straddle type vehicle, and is applicable to any other type of vehicles such as four-wheeled vehicles.

The vehicle 100 includes a vehicle body frame 101, which forms its frame. The vehicle body frame 101 rotatably supports a front wheel steering unit 102 at a front end, and swingably supports a swing arm 115 at a rear end. The front wheel steering unit 102 includes: a pair of left and right front forks 103, which support the front wheel FW; and a steering handlebar 104, which is attached to upper portions of the pair of front forks 103. At a right end portion of the steering handlebar 104, an accelerator grip 105 to be operated by a driver (a rider) to accelerate the vehicle 100 is provided. In the vicinity of the accelerator grip 105, a brake lever 106 (a front wheel brake operation element), which receives a brake operation by the driver for the front wheel FW, is rotatably provided. In addition, the swing arm 115 is swingably supported by the vehicle body frame 101 at a front end, and supports the rear wheel RW at a rear end.

An internal combustion engine 107 and a transmission 108, which are supported by the vehicle body frame 101, are disposed in a region between the front wheel FW and the rear wheel RW. Output of the internal combustion engine 107 is transmitted to the rear wheel RW through the transmission 108 and a chain transmission mechanism, not illustrated. The present embodiment relates to a chain drive mechanism, but a shaft drive mechanism or a belt drive mechanism may be used. In addition, a fuel tank 109 is disposed above the internal combustion engine 107. A seat 110 on which the rider is seated is disposed on the rear of the fuel tank 109. Note that the vehicle 100 according to the present embodiment is a vehicle using the internal combustion engine 107 as a drive source. However, without being limited to this, the vehicle 100 may be an electric vehicle using an electric motor as the drive source.

A front wheel brake mechanism 111 is a mechanism that applies the braking force to the front wheel FW. In the present embodiment, an example will be described in which a disc brake is used as the front wheel brake mechanism 111. The front wheel brake mechanism 111 includes: a brake rotor 112, which rotates coaxially and integrally with the front wheel FW; and a brake caliper 113, which includes brake pads (not illustrated). The brake caliper 113 is supported by the front fork 103, and clamps the brake rotor 112 with the brake pads to brake the front wheel FW, which rotates integrally with the brake rotor 112. Clamping force of the brake caliper 113 (that is, the braking force of the front wheel FW) can be generated in accordance with a brake operation amount by the rider on the brake lever 106. In addition, on the front fork 103, a front wheel speed sensor 114, which detects the rotation amount of the front wheel FW, is provided.

A rear wheel brake mechanism 116 is a mechanism that applies the braking force to the rear wheel RW. In the present embodiment, an example will be described in which a disc brake is used as the rear wheel brake mechanism 116. The rear wheel brake mechanism 116 includes: a brake rotor 117, which rotates coaxially and integrally with the rear wheel RW; and a brake caliper 118, which includes brake pads (not illustrated). The brake caliper 118 is supported by the swing arm 115, and clamps the brake rotor 117 with the brake pads to brake the rear wheel RW, which rotates integrally with the brake rotor 117. A brake pedal 119 (a rear wheel brake operation element), which receives a brake operation by the rider for the rear wheel RW, is rotatably provided on a right side portion of the vehicle 100, and the clamping force of the brake caliper 118 (that is, the braking force of the rear wheel RW) can be generated in accordance with the brake operation amount by the rider on the brake pedal 119. In addition, on the swing arm 115, a rear wheel speed sensor 120, which detects the rotation amount of the rear wheel RW, is provided.

An inertial sensor 121 includes, for example, an inertial measurement unit (IMU), and detects acceleration and an angular velocity generated in the vehicle 100 (the vehicle body). Specifically, the inertial sensor 121 detects the acceleration of the vehicle 100 in each of a front-and-rear direction, a vehicle width direction, and an up-and-down direction, and detects the angular velocity of the vehicle 100 in each of a roll direction, a pitch direction, and a yaw direction. Here, in the present embodiment, an example using the inertial sensor 121 will be described, but a sensor which detects the acceleration and/or angular velocity in each direction may be individually provided. In addition, a sensor which detects the speed of the vehicle 100 in each of the front-and-rear direction, the vehicle width direction, and the up-and-down direction may be provided, or a sensor which detects the angle of the vehicle 100 in each of the roll direction, the pitch direction, and the yaw direction may be provided.

### [Configuration of Brake Device]

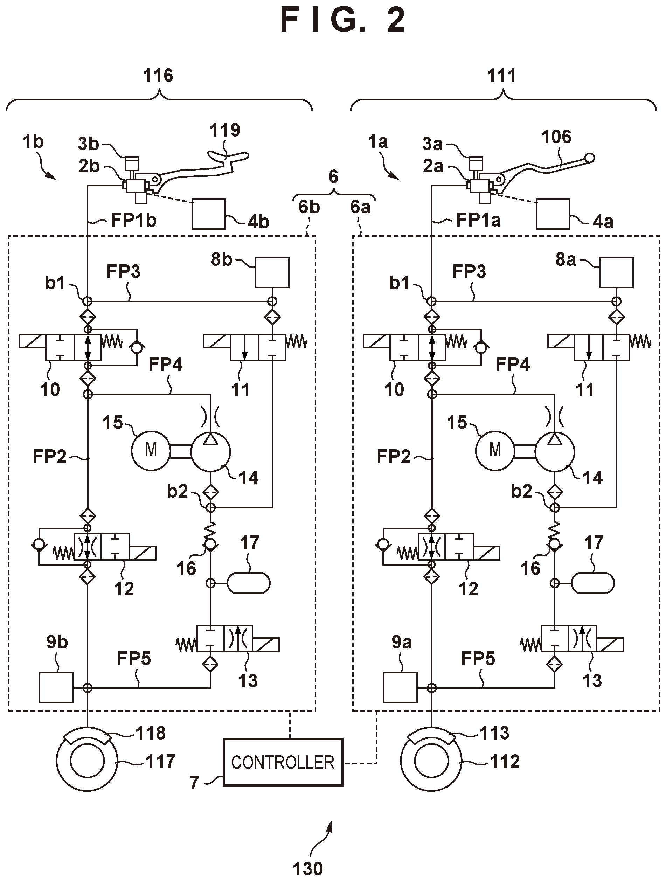

Fig. 2 is a schematic diagram illustrating a configuration example of a brake device 130 (a brake system) that applies the braking force to the front wheel FW and the rear wheel RW in the vehicle 100 according to the present embodiment. The brake device 130 includes: the front wheel brake mechanism 111, which applies the braking force to the front wheel FW in accordance with the operation amount by the rider on the brake lever 106 (a front wheel brake operation amount); and the rear wheel brake mechanism 116, which applies the braking force to the rear wheel RW in accordance with the operation amount by the rider on the brake pedal 119 (a rear wheel brake operation amount).

The front wheel brake mechanism 111 includes a hydraulic circuit 1a, which supplies the brake caliper 113 with the hydraulic pressure of a brake fluid (a working fluid) generated to correspond to the operation amount by the rider on the brake lever 106. The brake caliper 113 clamps the brake rotor 112 with the brake pads (not illustrated) using the hydraulic pressure of the brake fluid supplied by the hydraulic circuit 1a, and generates the braking force of the front wheel FW. In the case of the present embodiment, the hydraulic circuit 1a includes a master cylinder 2a. The master cylinder 2a supplies the brake fluid stored in a reservoir 3a to a flow passage FP1a in accordance with the operation amount on the brake lever 106, and converts the operation amount on the brake lever 106 into the hydraulic pressure of the brake fluid. The hydraulic pressure of the brake fluid generated in the master cylinder 2a is transmitted to the brake caliper 113. Thus, the brake rotor 112 is clamped by the brake pads of the brake caliper 113, and the braking force of the front wheel FW is generated.

The rear wheel brake mechanism 116 includes a hydraulic circuit 1b, which supplies the brake caliper 118 with the hydraulic pressure of a brake fluid (a working fluid) generated to correspond to the operation amount by the driver on the brake pedal 119. The brake caliper 118 clamps the brake rotor 117 with the brake pads (not illustrated) using the hydraulic pressure of the brake fluid supplied by the hydraulic circuit 1b, and generates the braking force of the rear wheel RW. In the case of the present embodiment, the hydraulic circuit 1b can include a master cylinder 2b. The master cylinder 2b supplies the brake fluid stored in a reservoir 3b to a flow passage FP1b in accordance with the operation amount on the brake pedal 119, and converts the operation amount on the brake pedal 119 into the hydraulic pressure of the brake fluid. The hydraulic pressure of the brake fluid generated in the master cylinder 2b is transmitted to the brake caliper 118. Thus, the brake rotor 117 is clamped by the brake pads of the brake caliper 118, and the braking force of the rear wheel RW is generated.

In addition, in the brake device 130 according to the present embodiment, brake assist is performed when the rider inputs an emergency brake operation for suddenly stopping the vehicle 100 into the brake lever 106 and/or the brake pedal 119. The brake assist includes pressurization assist that increases the braking force of the vehicle 100 (the front wheel FW, the rear wheel RW) by increasing the hydraulic pressure of the brake fluid supplied to the brake caliper 113, 118. In order to perform such brake assist, the brake device 130 according to the present embodiment includes: an assist mechanism 6, which performs the brake assist; and a controller 7, which controls the assist mechanism 6. The assist mechanism 6 can include: a front wheel assist mechanism 6a, which performs the brake assist for the front wheel FW; and a rear wheel assist mechanism 6b, which performs the brake assist for the rear wheel RW. The front wheel assist mechanism 6a can be configured as a part of the front wheel brake mechanism 111, and the rear wheel assist mechanism 6b can be configured as a part of the rear wheel brake mechanism 116. Hereinafter, an example in which the front wheel assist mechanism 6a and the rear wheel assist mechanism 6b are each configured with a return hydraulic modulator will be described. However, without being limited to them, the assist mechanism 6 may be configured with another mechanism such as brake by wire.

The front wheel assist mechanism 6a of the front wheel brake mechanism 111 includes: a plurality of electromagnetic valves 10 to 13 (valves) the driving of which is controlled by the controller 7; and a motor 15. The electromagnetic valve 10 and the electromagnetic valve 12 are each a normally open electromagnetic on-off valve, and the electromagnetic valve 11 and the electromagnetic valve 13 are each a normally closed electromagnetic on-off valve. The flow passage FP1a of the brake fluid branches at a branch point b1 into a flow passage FP2 and a flow passage FP3. The flow passage FP2 is connected with the brake caliper 113.

The electromagnetic valve 10 and the electromagnetic valve 12 are provided on the flow passage FP2, and open and close the flow passage FP2. The electromagnetic valve 12 is disposed closer to the brake caliper 113 than the electromagnetic valve 10 in the flow passage FP1a. In addition, the electromagnetic valve 11 is provided on the flow passage FP3, and opens and closes the flow passage FP3.

The flow passage FP3 branches at a branch point b2 into a flow passage FP4 and a flow passage FP5. The flow passage FP4 connects the branch point b2 with a portion on the flow passage FP2 between the electromagnetic valve 10 and the electromagnetic valve 12. A pump 14, which is driven by the motor 15, is provided on the flow passage FP4. An output port of the pump 14 is located to be closer to the flow passage FP2, and an input port of the pump 14 is located to be closer to the branch point b2. When the motor 15 is driven, the brake fluid is delivered by the pump 14 in the direction of the branch point b2 → the flow passage FP4 → the flow passage FP2. On the other hand, the flow passage FP5 connects, through the electromagnetic valve 13 and a check valve 16, the branch point b2 and a portion on the flow passage FP2 between the electromagnetic valve 12 and the brake caliper 113.

The electromagnetic valve 13 is provided on the flow passage FP5, and opens and closes the flow passage FP5. The check valve 16 and a reservoir portion 17 are provided on the flow passage FP5 between the electromagnetic valve 13 and the branch point b2. The check valve 16 is configured to permit the flow of the brake fluid in the direction from the electromagnetic valve 13 toward the pump 14, and to restrict the flow of the brake fluid in its opposite direction. The reservoir portion 17 connects the electromagnetic valve 13 and the check valve 16, and is configured to be capable of storing the brake fluid. In the case of the present embodiment, the reservoir portion 17 is an accumulator.

On the flow passage FP3, a hydraulic sensor 8a, which detects the hydraulic pressure of the brake fluid in the flow passage FP3 between the branch point b1 and the electromagnetic valve 11, is provided. It may be understood that the hydraulic sensor 8a (8b) is substantially a sensor that detects master cylinder pressure, which is the pressure of the brake fluid of the master cylinder 2a. Hereinafter, the hydraulic sensor 8 will be referred to as an "M/C pressure sensor 8", and the master cylinder pressure detected by the M/C pressure sensor 8 will be referred to as an "M/C detection value" in some cases.

In addition, on the flow passage FP2, a hydraulic sensor 9a, which detects the hydraulic pressure of the brake fluid in the flow passage FP2 between the electromagnetic valve 12 and the brake caliper 113, is provided. It may be understood that the hydraulic sensor 9a is substantially a sensor that detects brake caliper pressure, which is the pressure of the brake fluid of the brake caliper 113. Hereinafter, the hydraulic sensor 9 will be referred to as a "CAL pressure sensor 9", and the brake caliper pressure detected by the CAL pressure sensor 9 will be referred to as a "CAL detection value" in some cases.

In the front wheel assist mechanism 6a configured in such a manner, the flow passage FP1a and the flow passage FP2 constitute a main flow passage for causing the brake fluid to flow from the master cylinder 2a to the brake caliper 113. In addition, the flow passage FP4 and the flow passage FP5 constitute a sub flow passage for causing the brake fluid to flow back (return) from the brake caliper 113 to the main flow passage (the flow passage FP2). The flow passage FP3 constitutes a supply flow passage for supplying the brake fluid from the main flow passage (the flow passage FP1a) to the sub flow passages (the flow passage FP4 and the flow passage FP5). The controller 7 drives the plurality of electromagnetic valves 10 to 13 and the motor 15 (the pump 14) in the front wheel assist mechanism 6a to control the flow of the brake fluid in the main flow passage, the sub flow passage, and the supply flow passage, and is thus capable of performing (intervening) the brake assist for increasing the braking force of the front wheel FW.

The rear wheel assist mechanism 6b of the rear wheel brake mechanism 116 has the same configuration as that of the front wheel assist mechanism 6a of the front wheel brake mechanism 111. However, in the above description regarding the front wheel assist mechanism 6a, the master cylinder 2a, the brake caliper 113, the flow passage FP1a, the M/C pressure sensor 8a, and the CAL pressure sensor 9a can be respectively replaced with the master cylinder 2b, the brake caliper 118, the flow passage FP1b, the M/C pressure sensor 8b, and the CAL pressure sensor 9b. The controller 7 drives the plurality of electromagnetic valves 10 to 13 and the motor 15 (the pump 14) in the rear wheel assist mechanism 6b to control the flow of the brake fluid in the main flow passage, the sub flow passage, and the supply flow passage, and is thus capable of performing (intervening) the brake assist for increasing the braking force of the rear wheel RW.

Here, in the front wheel brake mechanism 111 according to the present embodiment, a lever operation amount sensor 4a such as a potentiometer is provided as a first detection unit that detects the operation amount (the front wheel brake operation amount) on the brake lever 106. However, the first detection unit is not limited to the lever operation amount sensor 4, which directly detects the operation amount on the brake lever 106. A sensor that indirectly detects an operation index value (information) having a correlation with the operation amount on the brake lever 106 may be used. For example, the M/C pressure sensor 8a, which detects the brake fluid pressure (substantially the master cylinder pressure) in the flow passage FP3 as the operation index value, may be used as the first detection unit, and the CAL pressure sensor 9a, which detects the brake fluid pressure (substantially the brake caliper pressure) in the flow passage FP2 as the operation index value, may be used as the first detection unit. In addition, one of these sensors may be used as the first detection unit, or a plurality of sensors may be used in combination (for example, the operation amount on the brake lever 106 may be detected from both of the detection values of the M/C pressure sensor 8a and the CAL pressure sensor 9a). Note that hereinafter, the operation amount on the brake lever 106 (the front wheel brake operation amount) will be referred to as a "lever operation amount" in some cases.

Further, similarly in the rear wheel brake mechanism 116 according to the present embodiment, a pedal operation amount sensor 4b such as a potentiometer is provided as a second detection unit that detects the operation amount on the brake pedal 119 (the rear wheel brake operation amount). However, the second detection unit is not limited to the pedal operation amount sensor 4b, which directly detects the operation amount on the brake pedal 119. A sensor that indirectly detects an operation index value (information) having a correlation with the operation amount on the brake lever 106 may be used. For example, the M/C pressure sensor 8b, which detects the brake fluid pressure (substantially the master cylinder pressure) in the flow passage FP3 as the operation index value, may be used as the second detection unit, and the CAL pressure sensor 9b, which detects the brake fluid pressure (substantially the brake caliper pressure) in the flow passage FP2 as the operation index value, may be used as the second detection unit. In addition, one of these sensors may be used as the first detection unit, or a plurality of sensors may be used in combination (for example, the operation amount on the brake pedal 119 may be detected from both of the detection values of the M/C pressure sensor 8b and the CAL pressure sensor 9b). Note that hereinafter, the operation amount on the brake pedal 119 (the rear wheel brake operation amount) will be referred to as a "pedal operation amount" in some cases.

### [Control Block Diagram of Brake Device]

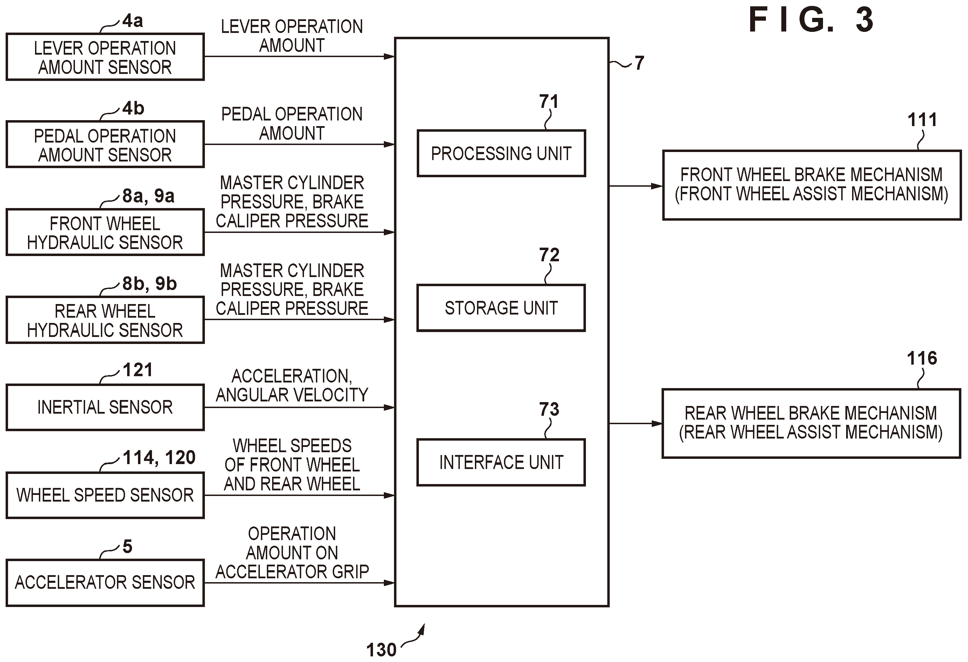

Fig. 3 is a control block diagram of the brake device 130. The controller 7 includes: a processing unit 71; a storage unit 72 such as a RAM and a ROM; and an interface unit 73, which relays transmission and reception of signals to and from an external device. The processing unit 71 is a processor represented by a CPU, and controls the assist mechanism 6 (the front wheel assist mechanism 6a and the rear wheel assist mechanism 6b) by executing a program stored in the storage unit 72. The storage unit 72 stores various types of data in addition to the program executed by the processing unit 71.

A detection result of the lever operation amount sensor 4a (the operation amount on the brake lever 106) and a detection result of the pedal operation amount sensor 4b (the operation amount on the brake pedal 119) are input into the interface unit 73 via a signal processing circuit, not illustrated. Detection results of the front wheel hydraulic sensors 8a and 9a, the rear wheel hydraulic sensors 8b and 9b, the inertial sensor 121, and the wheel speed sensors 114 and 120 can also be input into the interface unit 73. In addition, an accelerator sensor 5, which detects an operation amount on the accelerator grip 105 (hereinafter, referred to as an accelerator operation amount), is provided on the brake device 130, and a detection result of the accelerator sensor 5 can also be input into the interface unit 73. The processing unit 71 controls the driving of the respective electromagnetic valves 10 to 13 and the motor 15 of the assist mechanism 6 (the front wheel assist mechanism 6a and the rear wheel assist mechanism 6b) using a drive circuit, not illustrated, based on these detection results. Note that the controller 7 (the processing unit 71) may be configured with an electronic control unit (ECU) mounted on the vehicle 100.

When a lever operation amount that exceeds a first intervention threshold is detected by the lever operation amount sensor 4a, or when a pedal operation amount that exceeds a second intervention threshold is detected by the pedal operation amount sensor 4b, the controller 7 according to the present embodiment starts brake assist intervention using the assist mechanism 6 (the front wheel assist mechanism 6a, the rear wheel assist mechanism 6b). The first intervention threshold is a threshold (a front wheel side intervention threshold) for determining whether to start the brake assist intervention using the assist mechanism 6, based on the lever operation amount. The second intervention threshold is a threshold (a rear wheel side intervention threshold) for determining whether to start the brake assist intervention using the assist mechanism 6, based on the pedal operation amount.

The brake assist intervention for the front wheel FW using the front wheel assist mechanism 6a is started by the controller 7 when the pedal operation amount that exceeds the second intervention threshold is detected by the pedal operation amount sensor 4b. In addition, the brake assist intervention for the front wheel FW using the front wheel assist mechanism 6a is started by the controller 7 also when the lever operation amount that exceeds the first intervention threshold is detected by the lever operation amount sensor 4a. Similarly, the brake assist intervention for the rear wheel RW using the rear wheel assist mechanism 6b can be started by the controller 7 when the pedal operation amount that exceeds the second intervention threshold is detected by the pedal operation amount sensor 4b or when the lever operation amount that exceeds the first intervention threshold is detected by the lever operation amount sensor 4a. Note that the brake assist intervention for both the front wheel FW and the rear wheel RW may be always performed at the same time. In addition, for example, when the pedal operation amount that exceeds the second intervention threshold is detected by the pedal operation amount sensor 4b, the brake assist intervention may be performed in either the front wheel FW or the rear wheel RW, such as a case where only the brake assist intervention is performed for the front wheel FW.

Depending on the driving mode of the rider, by the way, the pedal operation amount that exceeds the second intervention threshold may be detected by the pedal operation amount sensor 4b, although the rider does not have an intention of performing emergency braking, and the brake assist intervention may start. For example, in traveling on a downhill, by finely operating the brake lever 106 while strongly operating the brake pedal 119, the rider stabilizes the vehicle 100 (the vehicle body). In this situation, when the pedal operation amount exceeds the second intervention threshold, the brake assist intervention using the assist mechanism 6 is started, and the rider may feel uncomfortable in driving. Therefore, there is a demand for appropriately releasing the brake assist even in a case where the brake assist intervention has been started in response to the operation on the brake pedal 119, and for performing appropriate brake assist as intended by the rider. Hence, in the brake device 130 according to the present embodiment, in a state in which the brake assist is started in response to the pedal operation amount exceeding the second intervention threshold, the controller 7 releases the brake assist intervention, based on the lever operation amount that has been detected by the lever operation amount sensor 4a.

### [Control Flow of Brake Assist]

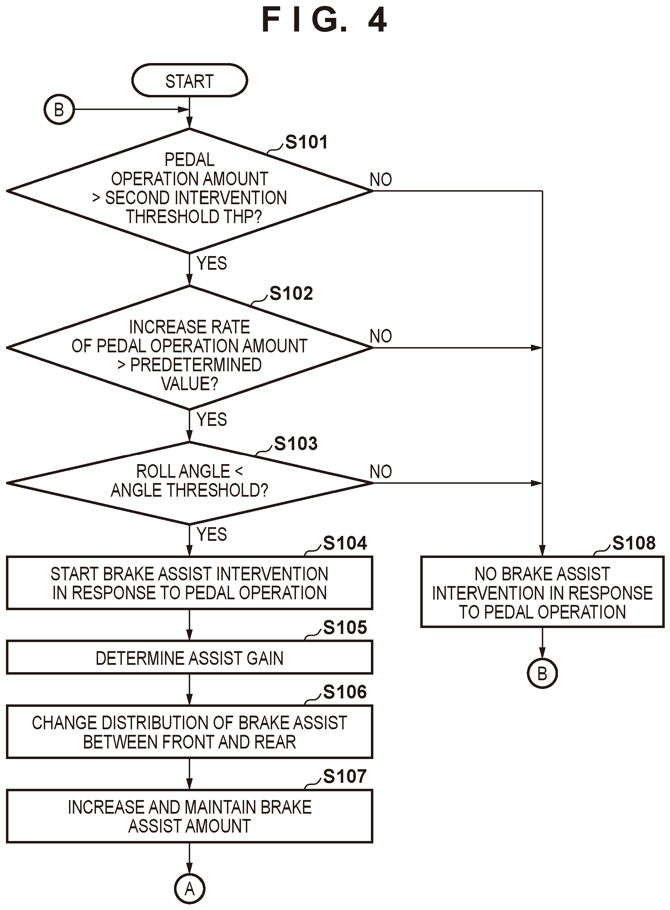

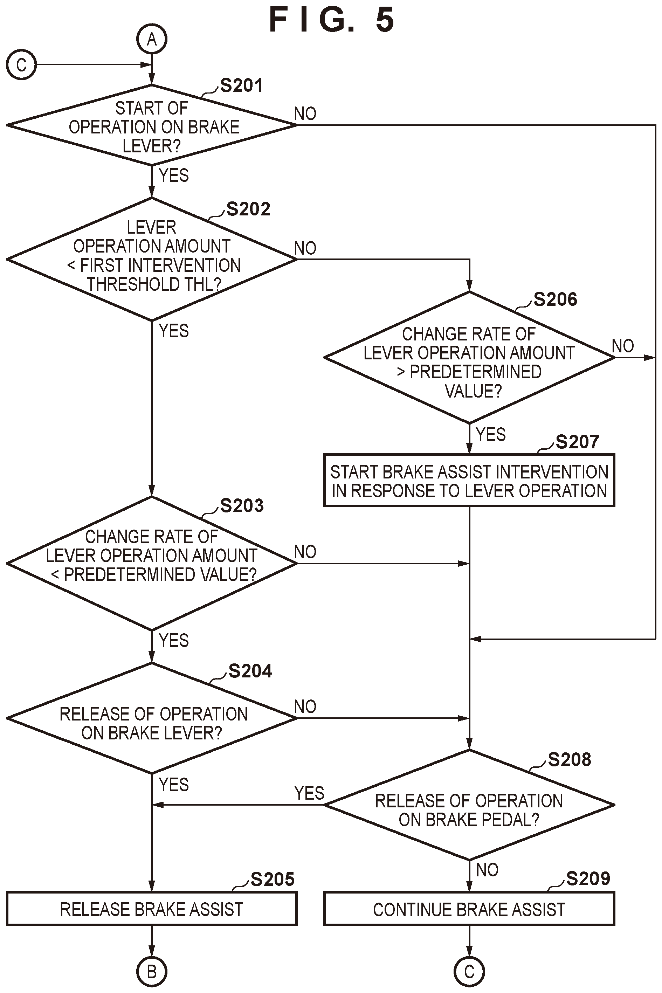

Hereinafter, an example of a control flow of the brake assist in the brake device 130 according to the present embodiment will be described. Fig. 4 illustrates a control flow for starting and performing the brake assist intervention in response to the operation on the brake pedal 119 the pedal operation amount of which exceeds a second intervention threshold THp. Fig. 5 illustrates a control flow for releasing the brake assist intervention that has been started in response to the operation on the brake pedal 119. The control flows of Figs. 4 and 5 can be performed by the controller 7 (for example, the processing unit 71). Note that in the brake device 130 according to the present embodiment, the brake assist intervention is separately started and performed in response to the operation on the brake lever 106 the lever operation amount of which exceeds a first intervention threshold TH_{L}. However, its description will be omitted here.

In step S101, the controller 7 determines whether the pedal operation amount that exceeds the second intervention threshold TH_{P} is detected by the pedal operation amount sensor 4b (the second detection unit). That is, the controller 7 determines whether the pedal operation amount exceeds the second intervention threshold TH_{P}, based on a detection result of the pedal operation amount sensor 4b. The second intervention threshold TH_{P} is a threshold for determining whether to start the brake assist in response to the pedal operation amount, and can be set beforehand by experiment, simulation, or the like. In a case where the pedal operation amount that exceeds the second intervention threshold TH_{P} is not detected, the processing proceeds to step S108, and the controller 7 does not perform the brake assist intervention. On the other hand, in a case where the pedal operation amount that exceeds the second intervention threshold TH_{P} is detected, the processing proceeds to step S102.

In step S102, the controller 7 determines whether an increase rate of the pedal operation amount is larger than a predetermined value, based on the detection result of the pedal operation amount sensor 4b. In addition, the predetermined value used in the present step S102 can be set beforehand by experiment, simulation, or the like with a value (an increase rate) with which it is possible to determine whether the rider has intentionally performed the emergency brake operation on the brake pedal 119. In a case where the increase rate of the pedal operation amount is equal to or smaller than the predetermined value, the processing proceeds to step S108, and the controller 7 does not perform the brake assist intervention. On the other hand, in a case where the increase rate of the pedal operation amount is larger than the predetermined value, the processing proceeds to step S103.

In step S103, the controller 7 determines whether a roll angle (a bank angle) of the vehicle 100 is smaller than an angle threshold, based on a detection result of the inertial sensor 121. For example, the roll angle of the vehicle 100 is obtained by integrating the angular velocity in the roll direction that has been detected by the inertial sensor 121. In a case where the roll angle of the vehicle 100 is large, if the brake assist (the pressurization assist) is performed in addition to the emergency brake operation by the rider, the attitude of the vehicle 100 may be unstable. Therefore, the angle threshold can be set beforehand by experiment, simulation, or the like with a value (for example, a limit value) that enables the attitude of the vehicle 100 to be stable even though the brake assist is performed, in addition to the emergency brake operation. In a case where the roll angle of the vehicle 100 is equal to or larger than the angle threshold, the processing proceeds to step S108, and the controller 7 does not perform the brake assist intervention. On the other hand, in a case where the roll angle of the vehicle 100 is smaller than the angle threshold, the processing proceeds to step S104.

In step S104, the controller 7 starts the brake assist intervention in response to the operation on the brake pedal 119. In the case of the present embodiment, the controller 7 starts the brake assist intervention for the rear wheel RW using the rear wheel assist mechanism 6b and the brake assist intervention for the front wheel FW using the front wheel assist mechanism 6a, as the brake assist intervention in response to the operation on the brake pedal 119. Note that the controller 7 may start only the brake assist intervention for the front wheel FW using the front wheel assist mechanism 6a in response to the operation on the brake pedal 119.

In the present embodiment, it is determined whether to start the brake assist intervention in combination with steps S101 through S103. However, there is no intention of being limited to them. For example, by using only step S101, it may be determined whether to start the brake assist intervention in response to the operation on the brake pedal 119. In this case, steps S102 through S103 can be omitted. In addition, by using only steps S101 through S102, it may be determined whether to start the brake assist intervention in response to the operation on the brake pedal 119. In this case, step S103 can be omitted.

Next, in step S105, the controller 7 determines a gain of the brake assist (an assist gain) in accordance with the vehicle speed (the speed of the vehicle 100) at the time of the brake assist intervention. The assist gain may be understood as an amplification factor of the pressurization. The vehicle speed can be obtained, based on the detection results of the wheel speed sensors 114 and 120. For example, the controller 7 holds information indicating a relationship between the vehicle speed and the assist gain beforehand in the storage unit 72, and it is possible to determine the assist gain from the vehicle speed, based on such information.

In step S106, the controller 7 changes the distribution of the braking force (the brake assist) between the front and the rear of the vehicle, that is, the distribution of the braking force (the brake assist) between the front wheel FW and the rear wheel RW in accordance with a pitch angle of the vehicle 100. It is possible to obtain the pitch angle of the vehicle by integrating the angular velocity in the pitch direction that has been detected by the inertial sensor 121. For example, the controller 7 changes the distribution of the braking force between the front wheel FW and the rear wheel RW in such a manner that the braking force of the rear wheel RW becomes larger than the braking force of the front wheel FW in accordance with an increase in the pitch angle, a positive direction of which is a direction that the vehicle 100 is lowered toward the front side. As an example, when the pitch angle in such a positive direction is increased by the emergency brake operation, the brake assist amount is increased in the rear wheel brake mechanism 116 (the rear wheel assist mechanism 6b), and the brake assist amount is reduced in the front wheel brake mechanism 111 (the front wheel assist mechanism 6a). This enables the attitude of the vehicle 100 in the pitch direction to be stable.

In step S107, as the time elapses since the brake assist intervention is started in step S104, the controller 7 increases or maintains the brake assist amount. For example, the controller 7 increases the brake assist amount at a predetermined increase rate until a predetermined time elapses since the brake assist intervention is started. After the predetermined time elapses, the controller 7 maintains the brake assist amount constant.

The processing proceeds to Fig. 5, in step S201, the controller 7 determines whether the rider has started operating the brake lever 106, based on a detection result of the lever operation amount sensor 4a (the first detection unit). For example, in a case where the lever operation amount sensor 4a detects that the lever operation amount exceeds the first determination threshold, the controller 7 is capable of determining that the rider has started operating the brake lever 106. The first determination threshold is a threshold for determining whether the brake lever 106 is being operated (a front wheel side determination threshold), that is, a threshold for determining on/off of the brake lever 106, and is set with a value smaller than the first intervention threshold TH_{L}. In a case where the rider does not start operating the brake lever 106, the processing proceeds to step S208. On the other hand, in a case where the rider has started operating the brake lever 106, the processing proceeds to step S202.

In step S202, the controller 7 determines whether the lever operation amount is smaller than the first intervention threshold TH_{L}, based on a detection result of the lever operation amount sensor 4a. The first intervention threshold TH_{L} is a threshold (the front wheel side intervention threshold) for determining whether to start the brake assist in accordance with the lever operation amount, and can be set beforehand by experiment, simulation, or the like. In a case where the lever operation amount is equal to or larger than the first intervention threshold TH_{L}, it is assumed that the rider has operated the brake lever 106 intending to perform the emergency braking, and the processing proceeds to step S206. On the other hand, in a case where the lever operation amount is smaller than the first intervention threshold TH_{L}, the processing proceeds to step S203.

In step S203, the controller 7 determines whether a change rate (for example, an increase rate) of the lever operation amount is smaller than a predetermined value, based on the detection result of the lever operation amount sensor 4a. In addition, the predetermined value used in the present step S202 can be set beforehand by experiment, simulation, or the like with a value (for example, the increase rate) with which it is possible to determine whether the rider has intentionally performed the emergency brake operation on the brake lever 106. In a case where the change rate of the lever operation amount is equal to or larger than the predetermined value, it is assumed that the rider has operated the brake lever 106 intending to perform the emergency braking, and the processing proceeds to step S208. On the other hand, in a case where the change rate of the lever operation amount is smaller than the predetermined value, the processing proceeds to step S204.

In step S204, the controller 7 determines whether the operation on the brake lever 106 is released by the rider, based on the detection result of the lever operation amount sensor 4a. For example, in a case where the lever operation amount sensor 4a detects that the lever operation amount becomes smaller than the first determination threshold, the controller 7 is capable of determining that the operation on the brake lever 106 is released by the rider. In a case where the operation on the brake lever 106 by the rider is not released, the processing proceeds to step S208. On the other hand, in a case where the operation on the brake lever 106 by the rider is released, it is possible to determine that the rider does not intend to perform the sudden braking. The processing proceeds to step S205, and the controller 7 releases the brake assist intervention.

In the above step S202, in the case where the lever operation amount is equal to or larger than the first intervention threshold TH_{L}, the processing proceeds to step S206, and then the controller 7 determines whether the change rate (for example, the increase rate) of the lever operation amount is larger than a predetermined value, based on the detection result of the lever operation amount sensor 4a. The predetermined value used in the present step S206 may be identical to the predetermined value used in the above step S203. In a case where the change rate of the lever operation amount is smaller than the predetermined value, the condition for the brake assist intervention based on the operation on the brake lever 106 is not satisfied, and thus the processing proceeds to step S208. On the other hand, in a case where the change rate of the lever operation amount is larger than the predetermined value, the processing proceeds to step S207, and the controller 7 starts the brake assist intervention in response to the operation on the brake lever 106. In this situation, the brake pressurization in response to the operation on the brake lever 106 is performed. In the case of the present embodiment, the controller 7 performs the brake assist in such a manner that a brake assist pressurization amount determined in accordance with brake assist in response to the operation on the brake lever 106 is added to a brake assist pressurization amount determined corresponding to the operation on the brake pedal 119. The brake assist intervention in response to the operation on the brake lever 106 is started, and then the processing proceeds to step S208.

Step S208 is performed in a case where the requirement of step S201, step S203, step S204, or step S206 is not satisfied. In step 208, the controller 7 determines whether the operation on the brake pedal 119 is released by the rider, based on the detection result of the pedal operation amount sensor 4b. For example, in a case where the pedal operation amount sensor 4b detects that the pedal operation amount becomes smaller than a second determination threshold, the controller 7 is capable of determining that the operation on the brake pedal 119 is released by the rider. In a case where the operation on the brake pedal 119 by the rider is released, neither the rider's operation on the brake pedal 119 nor the rider's operation on the brake lever 106 satisfies the condition for the brake assist intervention. Thus, the processing proceeds to step S205, and the controller 7 releases the brake assist intervention. On the other hand, in a case where the operation on the brake pedal 119 is not released by the rider, the processing proceeds to step S209, and the controller 7 continues the brake assist intervention.

The release of the brake assist can include a configuration of immediately stopping the pressurization to the brake caliper 113 using the brake assist completely, and in addition, a configuration of gradually reducing the brake assist pressurization. The configuration of gradually reducing the brake pressurization may be, for example, a configuration of maintaining the pressurization using the brake assist for a while (without further increasing the pressure using the brake assist, but continuing the pressurization for maintaining the brake assist pressurization amount at the time of determining the release), and then reducing the pressurization amount using the brake assist, as the brake operation amount by the rider decreases.

In this manner, in the present embodiment, even though the brake assist intervention is started by the operation on the brake pedal 119 and then the input into the brake pedal continues, it becomes possible to release the brake assist depending on the operation mode of the brake lever 106. That is, it becomes possible to grasp the rider's intention of controlling the vehicle behavior, and to perform the brake assist control that does not make the rider feel uncomfortable.

Here, steps S201 through S202 and step S204 represent a first behavior in which after the lever operation amount exceeds the first determination threshold, the lever operation amount becomes smaller than the first determination threshold without exceeding first intervention threshold TH_{L}. When the first behavior is detected using the lever operation amount sensor 4a, the controller 7 can release the brake assist intervention. Note that when determining whether to release the brake assist intervention using only steps S201 through S203 and step S204, step S203 may be omitted.

In addition, step S201 and steps S203 through S204 represent a second behavior in which after the lever operation amount exceeds the first determination threshold, the lever operation amount becomes smaller than the first determination threshold without the change rate of the lever operation amount exceeding the predetermined value. When the second behavior is detected by using the lever operation amount sensor 4a, the controller 7 can release the brake assist intervention. On the other hand, even in a case where the second behavior is detected by using the lever operation amount sensor 4a, when the lever operation amount that exceeds the first intervention threshold TH_{L} is detected by using the lever operation amount sensor 4a in step S202, the brake assist intervention may continue without being released. Note that when determining whether to release the brake assist intervention that has been started in response to the operation on the brake pedal 119 using only step S201 and steps S203 through S204, step S202 may be omitted.

As described above, in a state in which the brake assist intervention has been started in response to the pedal operation amount exceeding the second intervention threshold TH_{P}, the brake device 130 according to the present embodiment releases the brake assist intervention, based on the lever operation amount that has been detected by the lever operation amount sensor 4a. Thus, even in the case where the brake assist intervention has been unintentionally started in response to the operation on the brake pedal 119 by the rider, it becomes possible to appropriately release the brake assist, and to perform appropriate brake assist as intended by the rider.

### <Second Embodiment>

A second embodiment according to the present invention will be described. The present embodiment basically takes over the first embodiment, and can follow the first embodiment except for the matters to be described below.

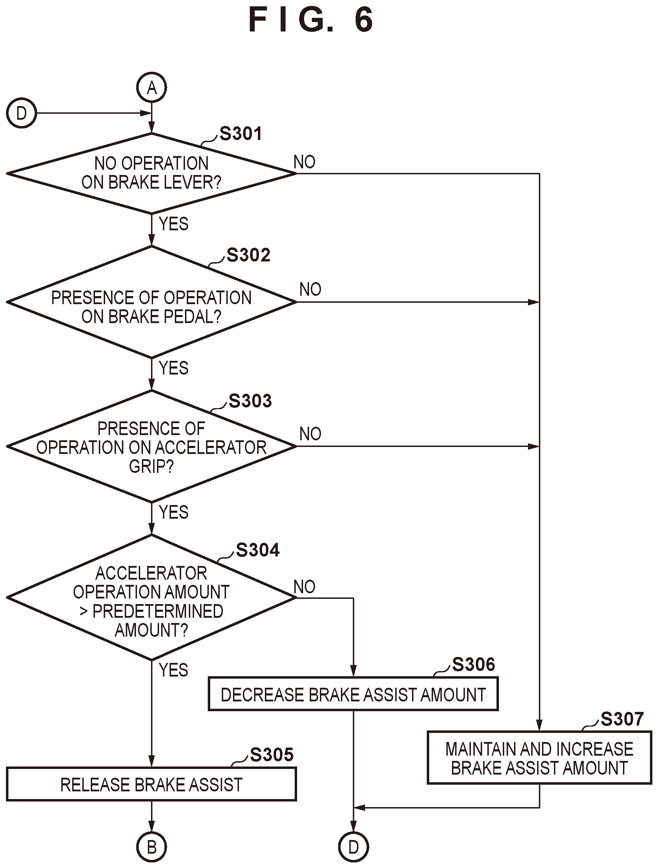

Hereinafter, an example of a control flow of the brake assist in the brake device 130 according to the present embodiment will be described. Fig. 6 illustrates a control flow for releasing the brake assist intervention started in response to the operation on the brake pedal 119. The control flow of Fig. 6 can be performed by the controller 7 (for example, the processing unit 71). Note that with regard to the control flow for starting and performing the brake assist intervention in response to the operation on the brake pedal 119 the pedal operation amount of which exceeds the second intervention threshold THp, it can be performed in accordance with the control flow of Fig. 4 that has been described in the above first embodiment.

In step S301, the controller 7 determines whether there is no operation on the brake lever 106 by the rider, based on a detection result of the lever operation amount sensor 4a (the first detection unit). For example, in a case where the condition (the first condition) that the lever operation amount smaller than the first determination threshold is detected by the lever operation amount sensor 4a is satisfied, the controller 7 is capable of determining that there is no operation on the brake lever 106 by the rider. As described above, the first determination threshold is a threshold for determining whether the brake lever 106 is being operated, that is, a threshold for determining on/off of the brake lever 106, and is set with a value smaller than the first intervention threshold TH_{L}.

In a case where it is determined that the lever operation amount exceeds the first determination threshold and the brake lever 106 is being operated by the rider (that is, in a case where the first condition is not satisfied), the processing proceeds to step S307, and the controller 7 continues the brake assist intervention, and also maintains or increases the brake assist amount. The method for maintaining or increasing the brake assist amount has been described in the above step S107. On the other hand, in a case where the lever operation amount is smaller than the first determination threshold and it is determined that the brake lever 106 is not being operated by the rider (that is, in a case where the first condition is satisfied), the processing proceeds to step S302.

In step S302, the controller 7 determines presence or absence of the operation on the brake pedal 119 by the rider, based on a detection result of the pedal operation amount sensor 4b (the second detection unit). For example, in a case where a condition (a third condition) that the pedal operation amount that exceeds the second determination threshold is detected by the pedal operation amount sensor 4b is satisfied, the controller 7 is capable of determining the presence of the operation on the brake pedal 119 by the rider. The second determination threshold is a threshold for determining whether the brake pedal 119 is being operated (a rear wheel side determination threshold), that is, a threshold for determining on/off of the brake pedal 119, and is set with a value smaller than the second intervention threshold TH_{P}.

In a case where it is determined that the pedal operation amount is smaller than the second determination threshold and the brake pedal 119 is not being operated by the rider (that is, in a case where the third condition is not satisfied), the processing proceeds to step S307, and the controller 7 continues the brake assist intervention, and also maintains or increases the brake assist amount. On the other hand, in a case where the pedal operation amount exceeds the second determination threshold and it is determined that the brake lever 106 is being operated by the rider (that is, in a case where the third condition is satisfied), the processing proceeds to step S303.

In step S303, the controller 7 determines presence or absence of the operation on the accelerator grip 105 by the rider, based on a detection result of the accelerator sensor 5 (a third detection unit). For example, in a case where the accelerator sensor 5 detects an accelerator operation amount that exceeds the third determination threshold, the controller 7 is capable of determining the presence of the operation on the accelerator grip 105 by the rider. The third determination threshold is a threshold for determining whether the accelerator grip 105 is being operated, that is, a threshold for determining on/off of the accelerator grip 105, and can be set with a value smaller than a predetermined amount used in step S304 to be described later.

In a case where it is determined that the accelerator operation amount is smaller than the third determination threshold and the accelerator grip 105 is not being operated by the rider, the processing proceeds to step S307. The controller 7 continues the brake assist intervention, and also maintains or increases the brake assist amount. On the other hand, in a case where the accelerator operation amount exceeds the third determination threshold and it is determined that the accelerator grip 105 is being operated by the rider, the processing proceeds to step S304.

In step S304, the controller 7 determines whether a condition (a second condition) that the accelerator operation amount that exceeds a predetermined amount is detected by the accelerator sensor 5 is satisfied. The predetermined amount used in the present step S304 can be set beforehand by experiment, simulation, or the like with a value (an amount) with which it is possible to determine whether the rider has intentionally operated the accelerator grip 105 in order to release the brake assist.

In a case where the accelerator operation amount that exceeds the predetermined amount is not detected by the accelerator sensor 5 (that is, in a case where the second condition is not satisfied), the processing proceeds to step S306, and the controller 7 continues the brake assist intervention, and decreases the brake assist amount. On the other hand, in a case where the accelerator operation amount that exceeds the predetermined amount is detected by the accelerator sensor 5 (that is, in a case where the second condition is satisfied), the processing proceeds to step S305, and releases the brake assist intervention. For example, a rider who is traveling on a corner may perform a rear brake operation to stabilize the attitude of the motorcycle, or may try to perform an accelerator operation while gradually releasing the rear brake when passing through the corner to perform stable acceleration by adjusting the front-back load balance of the motorcycle. In the present embodiment, the accelerator operation amount is additionally considered. When the rider intends to control the vehicle body or stabilize acceleration, the brake assist is released, and thus it becomes possible to prevent the rider from feeling uncomfortable.

Here, in the present embodiment, the example has been described in which the brake assist intervention is released in a case where the first condition about the lever operation amount, the second condition about the accelerator operation amount, and the third condition about the pedal operation amount are all satisfied. However, limitation is not made thereto, and the brake assist intervention may be released in a case where only the first condition about the lever operation amount and the second condition about the accelerator operation amount are satisfied.

As described above, in a state in which the brake assist intervention has been started in response to the pedal operation amount exceeding the second intervention threshold THp, in a case where the first condition about the lever operation amount and the second condition about the accelerator operation amount are satisfied, the brake device 130 according to the present embodiment releases the brake assist intervention. Also, according to the present embodiment, it becomes possible to appropriately release the brake assist that has been started in response to the operation on the brake pedal 119, and to perform appropriate brake assist as intended by the rider.

### <Third Embodiment>

A third embodiment according to the present invention will be described. The present embodiment basically takes over the first embodiment, and can follow the first embodiment except for the matters to be described below. In addition, in the present embodiment, the second embodiment may be entirely or partially applied.

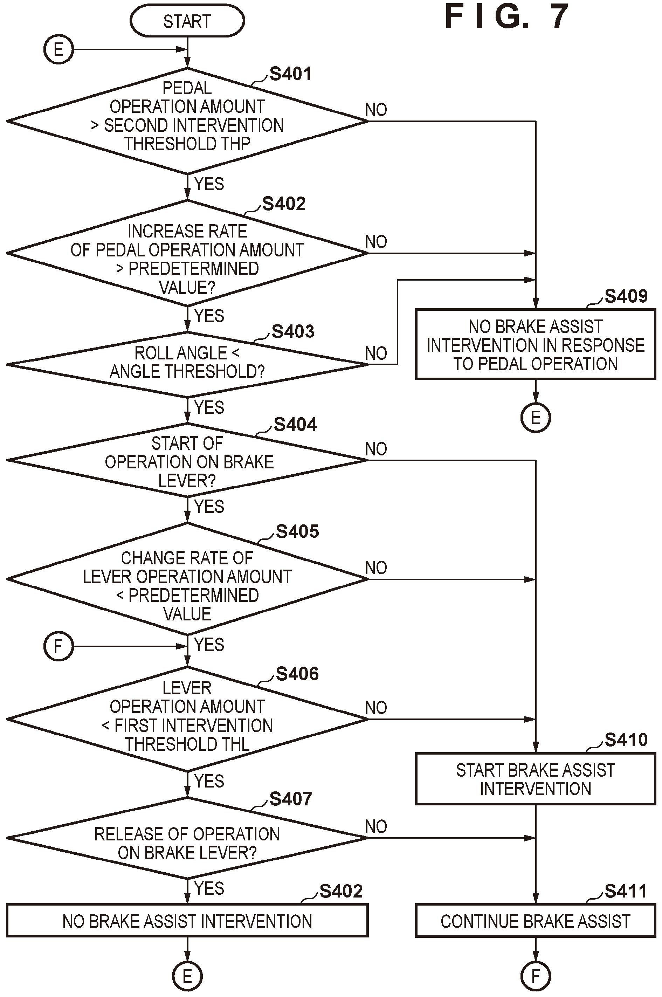

Hereinafter, an example of a control flow of the brake assist in the brake device 130 according to the present embodiment will be described. Fig. 7 illustrates a control flow for starting, performing, and releasing the brake assist intervention in response to the operation on the brake pedal 119. The present embodiment is different from the above-described embodiments in that after the operation amount and an operation amount change rate of the brake lever 106 are detected, a determination of the brake assist intervention in response to the operation on the brake pedal 119 is made.

In step S401, the controller 7 determines whether the pedal operation amount that exceeds the second intervention threshold TH_{P} is detected by the pedal operation amount sensor 4b (the second detection unit). In a case where the pedal operation amount that exceeds the second intervention threshold TH_{P} is not detected, the processing proceeds to step S409, and the controller 7 does not perform the brake assist intervention. On the other hand, in a case where the pedal operation amount that exceeds the second intervention threshold TH_{P} is detected, the processing proceeds to step S402.

In step S402, the controller 7 determines whether the increase rate of the pedal operation amount is larger than a predetermined value, based on the detection result of the pedal operation amount sensor 4b. In a case where the increase rate of the pedal operation amount is equal to or smaller than the predetermined value, the processing proceeds to step S409, and the controller 7 does not perform the brake assist intervention. On the other hand, in a case where the increase rate of the pedal operation amount is larger than the predetermined value, the processing proceeds to step S403.

In step S403, the controller 7 determines whether the roll angle (the bank angle) of the vehicle 100 is smaller than an angle threshold, based on a detection result of the inertial sensor 121. In a case where the roll angle of the vehicle 100 is equal to or larger than the angle threshold, the processing proceeds to step S409, and the controller 7 does not perform the brake assist intervention. On the other hand, in a case where the roll angle of the vehicle 100 is smaller than the angle threshold, the processing proceeds to step S404.

Note that steps S401 through S403 are steps of determining the necessity of the brake assist intervention. The steps are similar to steps S101 through S103 and step S108 in the flowchart of Fig. 4 that has been described in the first embodiment, and thus their detailed descriptions will be omitted here.

In step S404, the controller 7 determines whether the rider has started operating the brake lever 106, based on a detection result of the lever operation amount sensor 4a (the first detection unit). In a case where the rider does not start operating the brake lever 106, the processing proceeds to step S410. In a case where the rider has started operating the brake lever 106, the processing proceeds to step S405. Note that step S404 is a step similar to step S201 in the above-described flowchart of Fig. 5, and thus its detailed description will be omitted here.

In step S405, the controller 7 determines whether the change rate (for example, the increase rate) of the lever operation amount is smaller than a predetermined value, based on the detection result of the lever operation amount sensor 4a. In a case where the change rate of the lever operation amount is equal to or larger than the predetermined value, the processing proceeds to step S410. In a case where the change rate of the lever operation amount is smaller than the predetermined value, the processing proceeds to step S406. Note that step S405 is a step similar to step S203 in the above-described flowchart of Fig. 5, and thus its detailed description will be omitted here.

In step S406, the controller 7 determines whether the lever operation amount is smaller than the first intervention threshold TH_{L}, based on the detection result of the lever operation amount sensor 4a. In a case where the lever operation amount is equal to or larger than the first intervention threshold TH_{L}, the processing proceeds to step S410. In a case where the lever operation amount is smaller than the first intervention threshold TH_{L}, the processing proceeds to step S407. Note that step S406 is a step similar to step S204 in the above-described flowchart of Fig. 5, and thus its detailed description will be omitted here.

In step S407, the controller 7 determines whether the operation on the brake lever 106 is released by the rider, based on the detection result of the lever operation amount sensor 4a. In a case where the operation on the brake lever 106 by the rider is released, the processing proceeds to step S408, and the controller 7 does not perform brake assist intervention. On the other hand, in a case where the operation on the brake lever 106 by the rider is not released, it can be determined that the rider does not intend to perform sudden braking. Thus, the processing proceeds to step S411, and the controller 7 continues the brake assist intervention.

Here, steps S404 through S406 are steps for determining the necessity of the brake assist intervention. In a case where the respective requirements of steps S404 through S406 are not satisfied, step S410 is performed. In step S410, the controller 7 starts the brake assist intervention. The brake assist intervention here may be performed in accordance with only the assist pressurization amount based on the operation on the brake pedal 119, or may be performed in consideration of the assist amount based on the operation on the brake lever 106. For example, in a case where the operation amount on the brake lever 106 is equal to or larger than the first intervention threshold TH_{L} in step S406, the brake assist may be performed, based on both the operation on the brake pedal 119 and the operation on the brake lever 106. When the brake assist intervention is started in step S410, the processing returns to step S203 via step S206, and the brake assist is repeatedly continued until the operation amount on the brake lever 106 decreases.

Also in the present embodiment, even in a case where the brake assist intervention has been unintentionally started in response to the operation on the brake pedal 119 by the rider, it becomes possible to appropriately release the brake assist, and to perform appropriate brake assist as intended by the rider.

### <Summary of Embodiments>

### (Item 1)

A brake device (e.g. 130) for a vehicle (e.g. 100) including a front wheel brake operation element (e.g. 106) and a rear wheel brake operation element (e.g. 119), the brake device comprising:
a first detection unit (e.g. 4a, 8a) that detects an operation amount on the front wheel brake operation element as a front wheel brake operation amount;
a second detection unit (e.g. 4b, 8b) that detects an operation amount on the rear wheel brake operation element as a rear wheel brake operation amount;
an assist mechanism (e.g. 6) that performs brake assist for increasing braking force of the vehicle; and
a controller (e.g. 7) that controls the assist mechanism to start brake assist intervention when the rear wheel brake operation amount that exceeds a rear wheel side intervention threshold is detected by the second detection unit,
characterized in that, in a state in which the brake assist has been started in response to the rear wheel brake operation amount exceeding the rear wheel side intervention threshold, the controller releases the brake assist intervention based on the front wheel brake operation amount detected by the first detection unit.

According to this item, even in a case where the brake assist intervention has been started in response to the operation on the rear wheel brake operation element by the rider without an intention of performing the emergency braking, it becomes possible to appropriately release the brake assist, and to perform appropriate brake assist as intended by the rider.

### (Item 2)

The brake device according to item 1, characterized in that
the controller controls the assist mechanism to start the brake assist intervention also when the front wheel brake operation amount that exceeds the front wheel side intervention threshold is detected by the first detection unit,
the controller releases the brake assist in a case where a first behavior is detected by the first detection unit in the state, wherein the first behavior is a behavior in which, after the front wheel brake operation amount exceeds the front wheel side determination threshold, the front wheel brake operation amount becomes smaller than the front wheel side determination threshold without exceeding the front wheel side intervention threshold, and
the front wheel side determination threshold is a threshold for determining whether the front wheel brake operation element is being operated, and is set with a value smaller than the front wheel side intervention threshold.

According to this item, in a case where the first behavior in which the operation amount on the front wheel brake operation element is relatively small is detected, it is estimated that the rider does not intend to perform the emergency braking. Therefore, by releasing the brake assist, it becomes possible to perform appropriate brake assist as intended by the rider.

### (Item 3)

The brake device according to item 1 or 2, characterized in that
the controller controls the assist mechanism to start the brake assist intervention also when the front wheel brake operation amount that exceeds the front wheel side intervention threshold is detected by the first detection unit,
the controller releases the brake assist in a case where a second behavior is detected by the first detection unit in the state, wherein the second behavior is a behavior in which, after the front wheel brake operation amount exceeds the front wheel side determination threshold, the front wheel brake operation amount becomes smaller than the front wheel side determination threshold without a change rate of the front wheel brake operation amount exceeding a predetermined value, and
the front wheel side determination threshold is a threshold for determining whether the front wheel brake operation element is being operated, and is set with a value smaller than the front wheel side intervention threshold.

According to this item, in a case where the second behavior in which the operation on the front wheel brake operation element is relatively gentle is detected, it is estimated that the rider does not intend to perform the emergency braking. Therefore, by releasing the brake assist, it becomes possible to perform appropriate brake assist as intended by the rider.

### (Item 4)

The brake device according to item 3, characterized in that, in the state, even in a case where the second behavior is detected by the first detection unit, when the front wheel brake operation amount that exceeds the front wheel side intervention threshold is detected by the first detection unit, the controller continues the brake assist without releasing the brake assist.

According to this item, even in a case where the second behavior in which the operation on the front wheel brake operation element is relatively gentle is detected, when the front wheel brake operation amount is operated relatively strongly, there is a possibility that the rider intends to perform the emergency braking. Therefore, by continuing the brake assist, it becomes possible to perform appropriate brake assist as intended by the rider.

### (Item 5)

The brake device according to any one of items 1 to 4, further comprising a third detection unit (e.g. 5) that detects an operation amount on an accelerator grip (e.g. 105) provided in the vehicle,
characterized in that
the controller controls the assist mechanism to start the brake assist intervention also when the front wheel brake operation amount that exceeds the front wheel side intervention threshold is detected by the first detection unit,
the controller releases the brake assist in a case where a first condition and a second condition are satisfied in the state, wherein the first condition is a condition in which the front wheel brake operation amount smaller than the front wheel side determination threshold is detected by the first detection unit, and a second condition is a condition in which an operation amount on the accelerator grip that exceeds a predetermined amount is detected by the third detection unit, and
the front wheel side determination threshold is a threshold for determining whether the front wheel brake operation element is being operated, and is set with a value smaller than the front wheel side intervention threshold.

According to this item, by releasing the brake assist, based on the first condition about the operation amount on the accelerator grip and the second condition about the front wheel brake operation amount, it becomes possible to perform appropriate brake assist as further intended by the rider.

### (Item 6)

The brake device according to item 5, characterized in that
the controller releases the brake assist in a case where a third condition is further satisfied in addition to the first condition and the second condition in the state, wherein the third condition is a condition in which the rear wheel brake operation amount that exceeds a rear wheel side determination threshold is detected by the second detection unit, and
the rear wheel side determination threshold is a threshold for determining whether the rear wheel brake operation element is being operated, and is set with a value smaller than the rear wheel side intervention threshold.

According to this item, by further releasing the brake assist, based on the third condition about the rear wheel brake operation amount, it becomes possible to perform appropriate brake assist as further intended by the rider.

### (Item 7)

A brake device (e.g. 130) for a vehicle (e.g. 100) including a front wheel brake operation element (e.g. 106) and a rear wheel brake operation element (e.g. 119), the brake device comprising:
a first detection unit (e.g. 4a, 8a) that detects an operation amount on the front wheel brake operation element as a front wheel brake operation amount;
a second detection unit (e.g. 4b, 8b) that detects an operation amount on the rear wheel brake operation element as a rear wheel brake operation amount;
an assist mechanism (e.g. 6) that performs brake assist for increasing braking force of the vehicle; and
a controller (e.g. 7) that determines necessity of the brake assist intervention, based on the rear wheel brake operation amount that exceeds a rear wheel side intervention threshold being detected by the second detection unit, and that controls the assist mechanism, wherein
characterized in that the controller determines the necessity of the brake assist intervention, based on the front wheel brake operation amount and a change rate of the front wheel brake operation amount which are detected by the first detection unit after the rear wheel brake operation amount exceeds the rear wheel side intervention threshold.

According to this item, even in a case where the brake assist intervention has been started in response to the operation on the rear wheel brake operation element by the rider without an intention of performing the emergency braking, it becomes possible to appropriately release the brake assist, and to perform appropriate brake assist as intended by the rider.

### (Item 8)

A vehicle comprising the brake device according to any one of items 1 to 7.

According to this item, a vehicle is provided, including the brake device capable of appropriately performing the brake assist as intended by the rider.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A brake device (130) for a vehicle (100) including a front wheel brake operation element (106) and a rear wheel brake operation element (119), the brake device comprising:
a first detection unit (4a, 8a) that detects an operation amount on the front wheel brake operation element as a front wheel brake operation amount;
a second detection unit (4b, 8b) that detects an operation amount on the rear wheel brake operation element as a rear wheel brake operation amount;
an assist mechanism (6) that performs brake assist for increasing braking force of the vehicle; and
a controller (7) that controls the assist mechanism to start brake assist intervention when the rear wheel brake operation amount that exceeds a rear wheel side intervention threshold is detected by the second detection unit,
**characterized in that**, in a state in which the brake assist has been started in response to the rear wheel brake operation amount exceeding the rear wheel side intervention threshold, the controller releases the brake assist intervention based on the front wheel brake operation amount detected by the first detection unit.

2. The brake device according to claim 1, **characterized in that**
the controller controls the assist mechanism to start the brake assist intervention also when the front wheel brake operation amount that exceeds the front wheel side intervention threshold is detected by the first detection unit,
the controller releases the brake assist in a case where a first behavior is detected by the first detection unit in the state, wherein the first behavior is a behavior in which, after the front wheel brake operation amount exceeds the front wheel side determination threshold, the front wheel brake operation amount becomes smaller than the front wheel side determination threshold without exceeding the front wheel side intervention threshold, and
the front wheel side determination threshold is a threshold for determining whether the front wheel brake operation element is being operated, and is set with a value smaller than the front wheel side intervention threshold.

3. The brake device according to claim 1 or 2, **characterized in that**
the controller controls the assist mechanism to start the brake assist intervention also when the front wheel brake operation amount that exceeds the front wheel side intervention threshold is detected by the first detection unit,
the controller releases the brake assist in a case where a second behavior is detected by the first detection unit in the state, wherein the second behavior is a behavior in which, after the front wheel brake operation amount exceeds the front wheel side determination threshold, the front wheel brake operation amount becomes smaller than the front wheel side determination threshold without a change rate of the front wheel brake operation amount exceeding a predetermined value, and
the front wheel side determination threshold is a threshold for determining whether the front wheel brake operation element is being operated, and is set with a value smaller than the front wheel side intervention threshold.

4. The brake device according to claim 3, **characterized in that**, in the state, even in a case where the second behavior is detected by the first detection unit, when the front wheel brake operation amount that exceeds the front wheel side intervention threshold is detected by the first detection unit, the controller continues the brake assist without releasing the brake assist.

5. The brake device according to any one of claims 1 to 4, further comprising a third detection unit (5) that detects an operation amount on an accelerator grip (105) provided in the vehicle,
**characterized in that**
the controller controls the assist mechanism to start the brake assist intervention also when the front wheel brake operation amount that exceeds the front wheel side intervention threshold is detected by the first detection unit,
the controller releases the brake assist in a case where a first condition and a second condition are satisfied in the state, wherein the first condition is a condition in which the front wheel brake operation amount smaller than the front wheel side determination threshold is detected by the first detection unit, and a second condition is a condition in which an operation amount on the accelerator grip that exceeds a predetermined amount is detected by the third detection unit, and
the front wheel side determination threshold is a threshold for determining whether the front wheel brake operation element is being operated, and is set with a value smaller than the front wheel side intervention threshold.

6. The brake device according to claim 5, **characterized in that**
the controller releases the brake assist in a case where a third condition is further satisfied in addition to the first condition and the second condition in the state, wherein the third condition is a condition in which the rear wheel brake operation amount that exceeds a rear wheel side determination threshold is detected by the second detection unit, and
the rear wheel side determination threshold is a threshold for determining whether the rear wheel brake operation element is being operated, and is set with a value smaller than the rear wheel side intervention threshold.

7. A brake device (130) for a vehicle (100) including a front wheel brake operation element (106) and a rear wheel brake operation element (119), the brake device comprising:
a first detection unit (4a, 8a) that detects an operation amount on the front wheel brake operation element as a front wheel brake operation amount;
a second detection unit (4b, 8b) that detects an operation amount on the rear wheel brake operation element as a rear wheel brake operation amount;
an assist mechanism (6) that performs brake assist for increasing braking force of the vehicle; and
a controller (7) that determines necessity of the brake assist intervention, based on the rear wheel brake operation amount that exceeds a rear wheel side intervention threshold being detected by the second detection unit, and that controls the assist mechanism, wherein
**characterized in that** the controller determines the necessity of the brake assist intervention, based on the front wheel brake operation amount and a change rate of the front wheel brake operation amount which are detected by the first detection unit after the rear wheel brake operation amount exceeds the rear wheel side intervention threshold.

8. A vehicle comprising the brake device according to any one of claims 1 to 7.
